(19) Europäisches Patentamt
European Patent Office
Office européen des brevets

(11) **EP 2 448 786 B1**

(12) **FASCICULE DE BREVET EUROPEEN**

(45) Date de publication et mention
de la délivrance du brevet:
**21.11.2018 Bulletin 2018/47**

(21) Numéro de dépôt: **10724864.3**

(22) Date de dépôt: **17.06.2010**

(51) Int Cl.:
***B60Q 1/08*** *(2006.01)*   ***B60Q 1/14*** *(2006.01)*
***G08G 1/16*** *(2006.01)*   ***G01C 21/26*** *(2006.01)*

(86) Numéro de dépôt international:
**PCT/EP2010/058585**

(87) Numéro de publication internationale:
**WO 2011/000713 (06.01.2011 Gazette 2011/01)**

(54) **PROCÉDÉ DE COMMANDE D'UN ORGANE DE VÉHICULE**

VERFAHREN ZUR STEUERUNG EINES FAHRZEUGTEILS

METHOD FOR CONTROLLING A VEHICLE MEMBER

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **29.06.2009 FR 0954400**

(43) Date de publication de la demande:
**09.05.2012 Bulletin 2012/19**

(73) Titulaire: **Valeo Vision
93012 Bobigny (FR)**

(72) Inventeurs:
• **BRADAI, Benazouz
F-93500 Pantin (FR)**
• **KUOCH, Siav Kuong
F-94100 Saint Maur des Fossés (FR)**

(74) Mandataire: **Claassen, Maarten Pieter et al
Valeo Schalter und Sensoren GmbH
Laiernstraße 12
74321 Bietigheim-Bissingen (DE)**

(56) Documents cités:
**EP-A- 2 030 838     DE-A1- 19 756 574
JP-A- 2003 279 363     US-A1- 2002 080 618**

EP 2 448 786 B1

## Description

La présente invention est relative à un procédé de commande d'au moins un organe du véhicule. Elle concerne aussi un système pour cette commande ainsi qu'un véhicule qui en est équipé. L'organe peut être par exemple un dispositif d'éclairage de la route d'un véhicule, le procédé permettant de commander le faisceau de cet éclairage.

Son application préférentielle est l'industrie automobile notamment pour équiper des véhicules en matière de projection de lumière pour l'éclairage de la route devant le conducteur.

Le document US 2002/0080618 A1 décrit un procédé et un système de contrôle d'un phare connus dans lesquels les informations de navigation, de trafic et de présence de véhicules tiers sont pris en compte.

La qualité de l'éclairage de la route par les véhicules circulant est un élément fondamental à la fois pour le confort visuel et pour la sécurité des déplacements routiers. Longtemps, l'équipement des automobiles s'est limité à prévoir quelques faisceaux du type code, feu de croisement et feu de route ou encore feu de brouillard. Ces faisceaux sont traditionnellement contrôlés par le conducteur au moyen d'une commande de commutation purement manuelle. Elle occupe l'attention du conducteur alors que les conditions de circulation généralement impliquées par la gestion des projecteurs - trajets de nuit, par mauvais temps par exemple- méritent déjà toute sa concentration. Les capacités humaines ne permettent pas de gérer au mieux et en toutes circonstances la commande de l'éclairage.

Pour y remédier, certains systèmes utilisent des seuils de vitesse pour passer d'un état de faisceau à un autre. L'information de vitesse s'avère très nettement insuffisante pour caractériser un contexte de conduite et l'état d'éclairage qu'il implique.

Des dispositifs d'éclairage implémentant des commandes automatiques ont déjà été proposés avec l'emploi d'informations de navigation. Les systèmes de navigation associent des données de cartographie et des indications de localisation fournies par un dispositif du type GPS (pour Global Positioning System). On peut ainsi connaître à l'avance la géométrie de la voie de circulation et certaines conditions de contexte routier, par exemple l'entrée sur une autoroute. Des dispositifs d'éclairage exploitent ces informations pour la commande des faisceaux. En particulier, une technologie assure la commutation automatique entre un état activé d'un faisceau d'éclairage autoroutier et un état désactivé suivant la reconnaissance du type de voie de circulation empruntée par le véhicule.

On constate néanmoins que ce mode de commande automatisé de faisceau n'est pas dépourvu d'inconvénients. La localisation offerte par un système GPS a une résolution limitée (généralement de l'ordre d'une dizaine de mètres) si bien que la commande de faisceau ne peut prendre en compte que des états peu évolutifs de circulation et souvent avec des retards. A titre d'illustration, un changement ponctuel de conditions de circulation lié à un ralentissement sur une autoroute ne pourra pas être efficacement répercuté sur la commande d'éclairage pour désactiver en temps réel le faisceau d'éclairage autoroutier. Par ailleurs, les données cartographiques ne sont pas d'une totale fiabilité du fait d'éventuelles erreurs à leur construction ou de modifications physiques ultérieures des voies de circulation. Ces imperfections, inhérentes à la technologie GPS, sont d'autant plus gênantes que la commande d'éclairage touche des questions de sécurité routière.

L'invention a pour but de pallier au moins partiellement les inconvénients des techniques actuelles. A cet effet, elle propose de combiner les informations obtenues par un dispositif de navigation et celles fournies par des moyens de détection. Des objets cibles sont détectés et analysés de sorte à définir leur nature et la distance qui les sépare du véhicule équipé. Notamment, on peut ainsi détecter des véhicules suivis ou croisés ou encore une séparation de voies telle un terre-plein central, déterminer leur éloignement et tirer profit de l'ensemble des données ainsi rendues disponibles par le dispositif de navigation et les moyens de détection pour contrôler un organe du véhicule, par exemple commander un faisceau d'éclairage émis par un projecteur de véhicule. En proposant des jeux de données enrichies, l'invention permet d'optimiser la qualité de la commande d'organes du véhicule, par exemple une commande d'adaptation du faisceau d'éclairage.

L'invention concerne ainsi un procédé de commande d'au moins un organe du véhicule, comportant les étapes suivantes :

- obtenir des données de navigation aptes à caractériser le contexte routier du véhicule,
- détection d'objets cibles en avant du véhicule en utilisant des moyens de détection embarqués dans le véhicule;
- détermination d'une valeur de distance relative entre le véhicule et les objets cibles,
- caractérisation de la nature des objets cibles,
- détermination de l'état du trafic sur la voie du véhicule,
- commande dudit organe du véhicule en combinant des données de navigation, la nature des objets cibles, les valeurs de distance relative et l'état du trafic sur la voie du véhicule.

A titre préféré, les moyens de détection utilisés incluent au moins un capteur du type radar ou lidar ou caméra.

A la fois dynamiques et fiables, de tels moyens sont bien adaptés à leur combinaison avec un système de navigation.

Ce procédé peut être appliqué à différentes commandes d'organe de véhicule. Par exemple, il peut être utilisé pour contrôler la vitesse du véhicule, notamment sa vitesse de croisière. Egalement, on pourra utiliser le procédé pour commander l'activation ou la désactivation du moteur thermique ou du moteur électrique du véhicule, par exemple passer de la propulsion thermique à la propulsion électrique, en cas d'embouteillage ou de circulation en ville.

Le procédé selon l'invention commande le faisceau d'éclairage routier dudit véhicule, par exemple le passage d'un mode d'éclairage autoroute à un mode d'éclairage en ville.

Par ailleurs, l'étape de détection d'objets cibles peut comprendre :

- la détermination de l'espace libre et des vitesses d'évolution du véhicule, par exemple sur la voie du véhicule mettant en oeuvre le procédé ou sur une voie où ce véhicule est sur le point d'aller ; la détermination de la voie sur laquelle le véhicule est sur le point d'aller, peut se faire par détection de l'enclenchement de l'indicateur de direction du véhicule, ou par détection du rapprochement de ce véhicule d'un marquage au sol au moyen d'une caméra embarquée,
- la mesure de valeurs de position et de vitesse relatives entre le véhicule et des obstacles situés à l'avant du véhicule,
- la construction d'objets cibles par groupage d'obstacles présentant des valeurs de position et de vitesse relatives homogènes.

Dans un mode préféré de réalisation, le procédé tire également profit des données de navigation en vue de l'étape de détection d'objets cibles, par la définition, au moyen des données de navigation, d'une zone d'intérêt dans laquelle est opérée la détection.

On tire ainsi profit des deux sources de données de sorte que l'ensemble fonctionne en synergie.

Il est par ailleurs avantageux que l'étape de détection comprenne :

- l'obtention de données de navigation définissant des objets cibles potentiels,
- la confrontation des définitions d'objets cibles potentiels et des objets cibles détectés.

En confrontant ces informations, la fiabilité globale est accrue et les risques de commande de l'organe du véhicule inappropriée sont fortement diminués, ce qui est crucial en matière de sécurité.

Des objets cibles potentiels peuvent être une séparation centrale de la route d'un type prédéterminé.

Suivant une possibilité additionnelle, l'étape de commande de l'organe du véhicule, par exemple la commande d'adaptation du faisceau, exploite :

- une première information de commande si le type de séparation centrale correspond à un objet cible détecté,

- une deuxième information de commande si le type de séparation centrale ne correspond à aucun objet cible détecté.

Par exemple, si les données de navigation indiquent que le véhicule est à proximité ou sur une autoroute, un objet cible potentiel défini sera une séparation centrale. Selon la possibilité additionnelle, l'étape de détection créera une information relative à la présence ou non d'une séparation centrale, à savoir la présence de l'objet cible. Ainsi, si effectivement une séparation centrale est détectée, il sera envoyé une information de commutation de passage en faisceau autoroute, si le système d'éclairage émet un autre faisceau d'éclairage, comme un faisceau code, ou le maintien en faisceau autoroute, si le dispositif émet déjà un faisceau autoroute. En revanche, si aucune séparation centrale n'est détectée, il sera envoyé une information de commutation de passage en faisceau code, si le dispositif d'éclairage émet un faisceau autoroute, ou le maintien en faisceau code, si le dispositif l'émettait déjà.

Deux aspects de l'invention sont que l'étape de caractérisation de la nature des objets cibles comprend l'identification de véhicules suivis et que la commande de l'organe de véhicule exploite une information de commande fonction de la distance relative du véhicule et des véhicules suivis.

Selon l'invention, on raffine le procédé par :

- détermination d'une valeur de vitesse relative entre le véhicule et chaque véhicule suivi,
- calcul d'une valeur moyenne de vitesse relative pour l'ensemble des véhicules suivis,
- caractérisation du niveau de fluidité du trafic en fonction de la valeur moyenne de vitesse et de données de navigation caractérisant le type de route, et commande de l'organe du véhicule en exploitant une information de commande fonction du niveau de fluidité du trafic.

La nature des objets cibles peut comprendre l'identification de véhicules croisés. Préférentiellement dans ce cas, la commande de l'organe de véhicule exploite alors avantageusement une information de commande fonction de la distance relative du véhicule et des véhicules croisés.

On peut aussi écarter les données de navigation si leur indice de fiabilité est inférieur à un seuil prédéfini, pour la commande de l'organe de véhicule.

De façon similaire, une possibilité consiste à écarter les données de détection si leur indice de fiabilité est inférieur à un seuil prédéfini, pour la commande de l'organe de véhicule.

L'invention offre ainsi l'avantage de permettre au système de déterminer la commande de l'organe de véhicule la plus appropriée même si un type de données (navigation ou détection) n'est pas suffisamment fiable. Par exemple, la commande de l'organe de véhicule peut être l'activation du faisceau d'éclairage le plus approprié.

L'invention concerne également un système de commande d'au moins un un organe du véhicule, par exemple un dispositif d'éclairage de la route, comportant un dispositif embarqué de navigation, des moyens de détection d'objets cibles en avant du véhicule et des moyens de traitement adaptés pour mettre en oeuvre le procédé de l'invention.

Un autre objet de l'invention est un véhicule comportant un tel système.

Les dessins ci-joints sont donnés à titre d'exemples et ne sont pas limitatifs de l'invention. Ils représentent seulement un mode de réalisation de l'invention et permettront de la comprendre aisément. Ainsi, dans ces dessins, la commande d'organe choisie est la commande d'un faisceau d'éclairage du véhicule. Cependant, les illustrations décrites peuvent être appliquées à d'autres commandes, comme celles précédemment évoquées.

- La figure 1 schématise la coopération de composants intervenant dans la mise en oeuvre de l'invention.
- La figure 2 illustre une situation habituelle de circulation d'un véhicule sur une voie d'une route et parmi d'autres véhicules.
- La figure 3 montre une étape de détection d'obstacles.
- La figure 4 montre une étape de traitement suivant l'étape de la figure 3.
- La figure 5 présente un exemple de données fournies par le dispositif de navigation pour la combinaison d'informations de détection.
- La figure 6 est un diagramme de diverses étapes possibles dans le procédé.
- La figure 7 représente un exemple d'exploitation de l'invention avec une analyse de fluidité de trafic.
- La figure 8 est un autre diagramme révélant une suite d'actions en vue de la commande d'un faisceau du type « motorway lighting ».
- Les figures 9 et 10 illustrent un mode de détermination de l'indice de confiance des moyens de détection.
- La figure 11 montre un exemple d'horizon électronique dans un cas type de situation routière non limitatif.

Description détaillée de modes de réalisation non limitatifs de l'invention

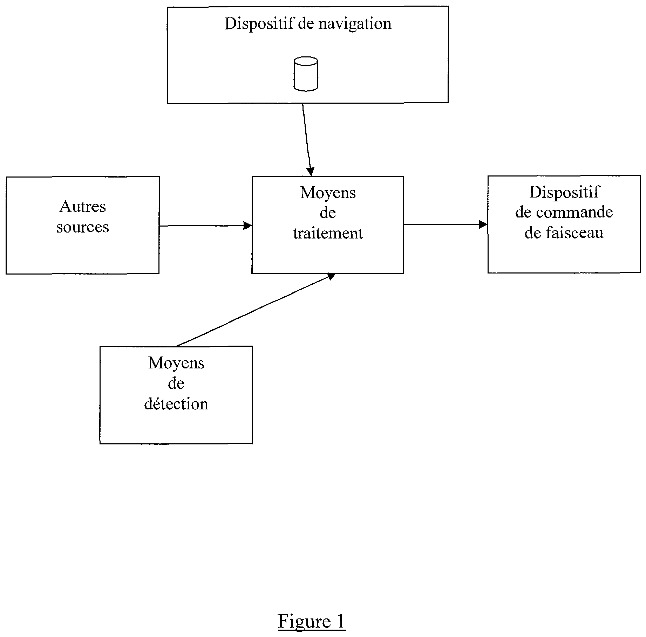

Des composants pouvant être utilisés pour la mise en oeuvre de l'invention sont illustrés en figure 1. Des moyens de traitement, par exemple basés sur un processeur, des ressources de stockage de données et des moyens logiciels, reçoivent des données communiquées par plusieurs sources.

Un dispositif de navigation constitue l'une de ces sources. Il peut être constitué suivant les standards actuels utilisant la localisation par l'utilisation d'un système de positionnement par satellite muni d'un récepteur embarqué à bord du véhicule, tel qu'un système de type GPS (et le système Galileo dans l'avenir). De façon connue en soi, un tel dispositif est apte à fournir une information de positionnement du véhicule par un repérage par triangulation mettant en oeuvre un réseau de satellites. L'illustration montre par ailleurs un élément de stockage de données 10 pour la définition de cartographies routières. Ces données concernent notamment la géométrie de la route (virages, lignes droites...), le nombre de voies, le sens de circulation, le type de route (autoroutes, routes principales, routes secondaires, voies urbaines...), le type de séparation entre les voies (lignes blanches, séparations physiques par rails ou autres). Bien entendu, la structure et l'emplacement des données de cartographie ne sont pas limitatifs de l'invention.

La présente invention peut par ailleurs exploiter le principe technique connu sous le vocable "horizon électronique". L'horizon électronique présente une image des chemins envisageables en amont du véhicule. Cet horizon est obtenu à partir des systèmes de navigation à travers une plateforme hardware (incluant une unité de traitement, capteurs de positionnement incluant un récepteur GPS, gyroscope, etc.) et des modules softwares. En se basant sur la position actuelle du véhicule, l'horizon électronique associe aux segments et aux points de la cartographie des informations décrivant l'environnement du véhicule (nombre de voies de circulation, les limitations de vitesse associées aux segments, des indications sur les ouvrages d'art, etc.). Cet horizon est normalement utilisé dans le développement des systèmes d'assistance à la conduite ayant besoin de la perception de l'environnement du véhicule.

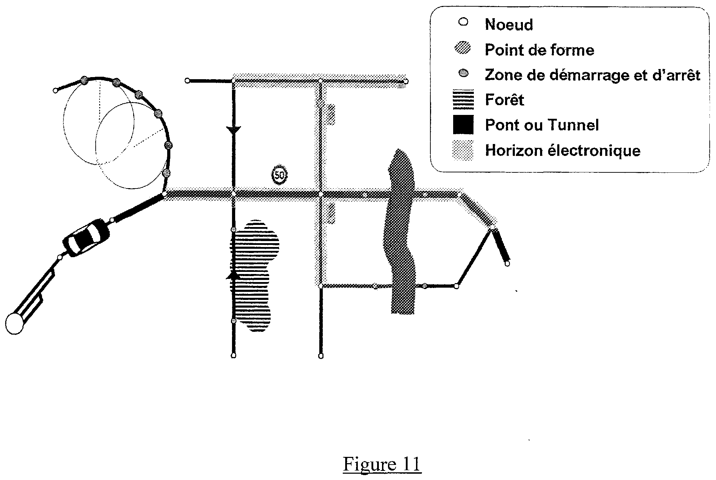

La figure 11 donne une illustration de la représentation d'un tel horizon.

Le dispositif de navigation forme ainsi une première source d'informations associant des données de position du véhicule et des indications liées à la cartographie pour fournir une définition du contexte routier dans lequel évolue le véhicule. Un indice de confiance est déterminé pour ces informations. Des sources complémentaires sont possibles telles des données de capteurs reflétant le comportement dynamique du véhicule (vitesse, accélération, rotation du volant par exemple) ou un système d'information sur le trafic du type utilisant le standard RDS-TMC (acronyme de Radio Data System-Traffic Messaging Channel).

Des moyens de détection constituent une autre source de données renseignant les moyens de traitement sur des objets situés dans l'environnement de conduite. Ces objets, ci-après dénommés objets cibles du fait qu'il s'agit de cibles à repérer par les moyens de détection, peuvent être de diverses natures. Il peut s'agir d'objets présents sur la chaussée, en particulier de véhicules suivis, situés à l'avant du véhicule équipé ou de véhicules croisés, circulant en sens inverse. Il peut aussi s'agir d'objets entourant la chaussée tels des séparations centrales entre les deux sens de circulation, des poteaux, des abris de bus, des feux de signalisation, de véhicules arrêtés ou stationnés.

Sur le plan matériel, les moyens de détection utilisent avantageusement un ou plusieurs capteurs du type radar ou lidar ou toute technologie apte à détecter des obstacles dans l'environnement du capteur, notamment avec au moins une caméra associée à des moyens de traitement d'images aptes à repérer des sources de lumière (telles les projecteurs d'autres véhicules). Les informations brutes générées par le ou les capteurs sont ensuite traitées de sorte à fournir les informations pertinentes pour la commande de faisceau d'éclairage.

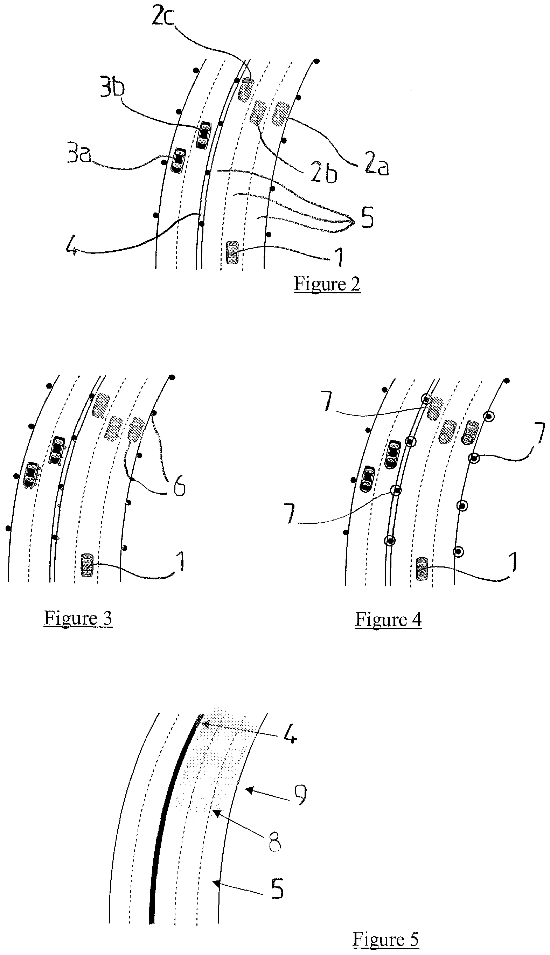

On donne ci-après un exemple de ce traitement, en référence aux figures 2 à 5.

La figure 2 montre une typologie de contexte de circulation d'un véhicule 1 équipé selon l'invention. La chaussée comporte une pluralité de voies de circulation 5 et des véhicules suivis 2a, 2b, 2c par le véhicule 1 équipé sont situés à l'avant du conducteur. Par delà une séparation centrale 4, des véhicules se déplacent en sens opposé et constituent des véhicules croisés 3a, 3b.

Les moyens de détection impactent des obstacles 6 schématisés par des points en figure 3. Les données fournies pour chacun de ces points concernent un jeu de coordonnées (en général, un repérage plan et deux coordonnées cartésiennes ou polaires suffisent) et/ou la vitesse relative. Un traitement des caractéristiques des obstacles ainsi définis est alors réalisé par tentative de groupage consistant à opérer des regroupement d'obstacles présentant des caractéristiques communes (en particulier obstacles adjacents partageant une même vitesse relative).

On donne ci-après un exemple plus précis de détection et de traitement de sorte que, à partir d'obstacles 6, on ait à effectuer des regroupements actualisés d'obstacles 6 en objets cibles. Dans l'exemple qui suit, un radar est utilisé pour détecter une pluralité d'objets cibles dans un environnement du véhicule, résultant en une pluralité de points révélant un obstacle 6 aux rayons du radar. Les points cibles et leurs positions respectives sont données par le radar. A titre d'exemple, le radar utilisé peut comporter les caractéristiques suivantes :

- fréquence : 25 GHz ou encore par exemple 77 GHz,
- détection entre 0,75 mètre et 75 mètres,
- détection d'une centaine de cibles,
- angle d'ouverture de 150°.

Par ailleurs, ce moyen de détection peut être raffiné de la façon suivante. Pour un point cible correspondant à un obstacle 6 détecté, on corrige sa position par rapport au véhicule équipé en fonction du déplacement de ce véhicule et sur un certain nombre de cycles (5 à titre indicatif). A partir de ce point, on cherche à former un groupe avec des points cibles voisins en fonction d'une première caractéristique déterminée constitutive d'une caractéristique commune. Préférentiellement, cette première caractéristique prédéterminée est une distance inférieure à un seuil de distance entre le point cible considéré et des points cibles voisins. Une distance de l'ordre d'un mètre peut convenir au fonctionnement de l'invention. Après cette étape de groupage, on vérifie si le groupe ainsi formé est homogène en fonction d'une deuxième caractéristique déterminée. Toujours à titre d'exemple, cette dernière caractéristique déterminée peut être une vitesse (le groupe est considéré comme homogène si les points regroupés partagent une vitesse identique ou similaire (c'est-à-dire inférieure à un seuil de tolérance prédéterminé). La caractéristique peut être également une caractéristique de puissance. On entend par là la puissance du signal réfléchi par la cible et renvoyé aux moyens de détection. Il est facilement compréhensible pour l'homme du métier que cette puissance varie selon la nature et la taille des cibles, par exemple si la cible est métallique ou non.

S'il s'avère que le groupe constitué est homogène au regard de cette deuxième caractéristique, on calcule une position globale du groupe par rapport au véhicule équipé de l'invention sur le nombre de cycles déterminés.

On obtient une liste d'objets cibles 7 figurés par des cercles en figure 4 et ayant pour attributs des coordonnées définissant une position, une vitesse relative par rapport au véhicule 1 et un indice de confiance. Ce traitement peut utiliser un filtre de Kalman, permettant, même dans un environnement de détection fortement bruité, de déterminer des objets significatifs. On effectue par ailleurs un calcul de confiance pour chaque objet cible sous forme d'un ratio de recouvrement entre la position prédite et la position actuelle de l'objet cible 7.

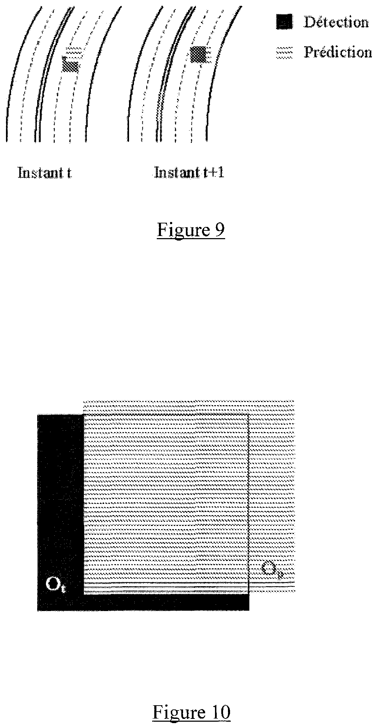

Ce calcul de confiance est plus précisément présenté en figures 9 et 10. La figure 9 montre, pour un obstacle et à deux instants (t et t + 1) la portion détectée et la positon prédite. Ces deux positions sont décalées, à moins d'une confiance idéale dans la détection. La figure 10 montre que le décalage entre la position détectée Ot et la position prédite Op à l'instant t se matérialise par un recouvrement partiel de leurs superficies. L'indice de confiance peut être calculé comme suit :

$$\text{Confiance} = Op \cap Ot \ / \ Op \cup Ot$$

Dans lequel le symbole $\cap$ représente l'intersection des surfaces de Op et Ot et $\cup$ leur réunion.

Les moyens de traitement prédéterminent par ailleurs la nature des objets cibles. Tous les obstacles en mouvements sont considérés en tant que véhicules et tous les obstacles fixes (déterminés en fonction de la position et la vitesse relative) sont considérés comme des éléments de l'environnement routier.

Avantageusement, les données fournies par la navigation enrichissent le traitement décrit pour les moyens de détection. Ainsi, la figure 5 présente la définition, au moyen des données de navigation, d'une zone de détection permettant de limiter une zone d'intérêt 8 en face du véhicule permettant de prendre en compte les cibles correspondant au véhicule routier. A cette figure, une zone d'intérêt 8 est définie en combinant des indications de bordure de route 9 et de séparation centrale 4. L'invention tient compte de la courbure de la route en avant du véhicule pour cibler une zone d'intérêt pour la détection de trafic qui n'est pas systématiquement au droit du véhicule mais qui suit le virage.

En complément ou en alternative à la définition d'une zone de détection 8, les données de détection peuvent être employées pour définir des objets cibles potentiels et caractériser les objets cibles détectés. En effet, la cartographie peut contenir des données à confronter aux données de détection de sorte à caractériser les objets cibles. Par exemple, une séparation centrale physique (notamment un terre plein) fournie par la cartographie de navigation pourra être validée par la détection d'un objet cible correspondant à une telle séparation et engendrera une commande de faisceau adapté, notamment un faisceau de type autoroute. A l'inverse, une absence de détection physique à cet endroit par les moyens de détection produira une information de commande différente, par exemple tenant compte du fait que des véhicules croisés peuvent être impactés par l'éclairage, contrairement à ce qu'indiquait le dispositif de navigation seul.

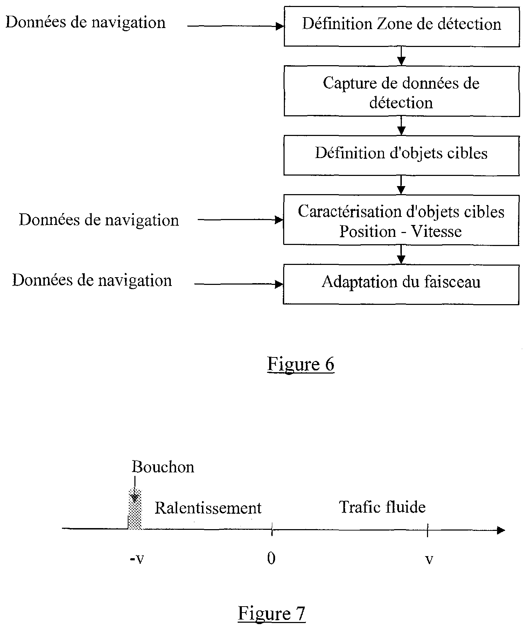

La figure 6 est une synthèse des étapes réalisées pour la détection. En fin de ce diagramme, le système de l'invention dispose de jeux de données permettant une adaptation affinée du faisceau. Différentes informations de commande sont ainsi construites grâce aux données de navigation et de détection. On entend par information de commande un paramètre résultant des traitements du procédé de l'invention et apte à participer à une prise de décision pour la commande effective. Les informations de commande peuvent être notamment des conditions cumulatives ou alternatives ou encore régies par une hiérarchie. L'invention génère ainsi une commande de faisceau fonction de l'ensemble des données pertinentes issues de la navigation et des moyens de détection. On donne ci-après quelques exemples d'information de commande :

- distance relative d'un véhicule suivi 2a, 2b, 2c inférieure à un seuil prédéterminé ;
- distance relative d'un véhicule suivi 2a, 2b, 2c supérieure à un seuil prédéterminé ;
- distance relative d'un véhicule croisé 3a, 3b inférieure à un seuil prédéterminé ;
- distance relative d'un véhicule croisé 3a, 3b supérieure à un seuil prédéterminé ;
- présence d'une séparation 4 physique sur la chaussée ;
- vitesse moyenne des véhicules suivis 2a, 2b, 2c inférieure à un seuil prédéterminé (trafic dense ou bouchon) ;

- circulation sur autoroute ;
- vitesse du véhicule équipé.

Ces informations de commande sont exploitées pour générer la commande de faisceau appropriée vers un dispositif de commande tel que représenté en figure 1. Ce dernier peut comporter par exemple des moyens d'activation, d'orientation du faisceau, de modifications de forme et d'intensité de la lumière projetée. Le dispositif de commande est soit intégré dans le système de l'invention, soit lui est relié. Il est tenu compte des indices de fiabilité des données.

L'invention n'est pas limitée à un type de faisceau mais est décrit ici dans le cas d'un faisceau du genre Motorway Lighting encore appelé faisceau autoroute. Ce type d'éclairage est apparu avec le développement de fonctions avancées connues sous le vocable anglais Advanced Front light System ou AFS capables de modifier le faisceau lumineux selon la situation de conduite. Un tel dispositif de commande de faisceau permet de modifier la portée et plus généralement la répartition spatiale de la projection de lumière. Il permet par conséquent de mettre en oeuvre plusieurs fonctions d'éclairage et de modifier l'éclairage dans une fonction déterminée pour l'adapter finement à la situation. Dans le cas du Motorway Lighting, il s'agit d'un faisceau perfectionné adapté à la circulation sur autoroute. La commande du faisceau Motorway Lighting ne doit être activée que dans un contexte autoroutier (ou équivalent) mais l'invention permet avantageusement de tenir compte d'autres paramètres pour activer ou désactiver le faisceau Motorway Lighting et/ou l'adapter. Le terme « adapter » ici employé s'entend de la faculté offerte par l'invention de contrôler le faisceau soit par une commande de type activation/ désactivation, soit par une modification du faisceau dans ses caractéristiques optiques telles la portée, l'inclinaison verticale et/ou horizontale, la répartition spatiale de densité lumineuse.

On donne maintenant un mode de réalisation de l'invention pour la commande de l'éclairage en tenant compte de la densité du trafic. Alors qu'actuellement le faisceau Motorway Lighting ne subit pas de contrôle relativement à des situations de bouchon ou de ralentissement, l'invention permet le calcul d'une vitesse relative pour chaque véhicule suivi 2a, 2b, 2c qui sont moyennées pour déterminer une valeur moyenne -par exemple arithmétique- de vitesse du flux de véhicules suivis. Le schéma de la figure 7 illustre cette application sur une ligne représentant la vitesse moyenne relative calculée en fonction de la vitesse du véhicule 1 référencée « v ».

Ainsi, lorsque la vitesse moyenne est positive, une situation de trafic fluide est détectée. Négative, cette valeur signifie un ralentissement qui peut aller jusqu'à une situation de bouchon quand la valeur moyenne est égale à - v.

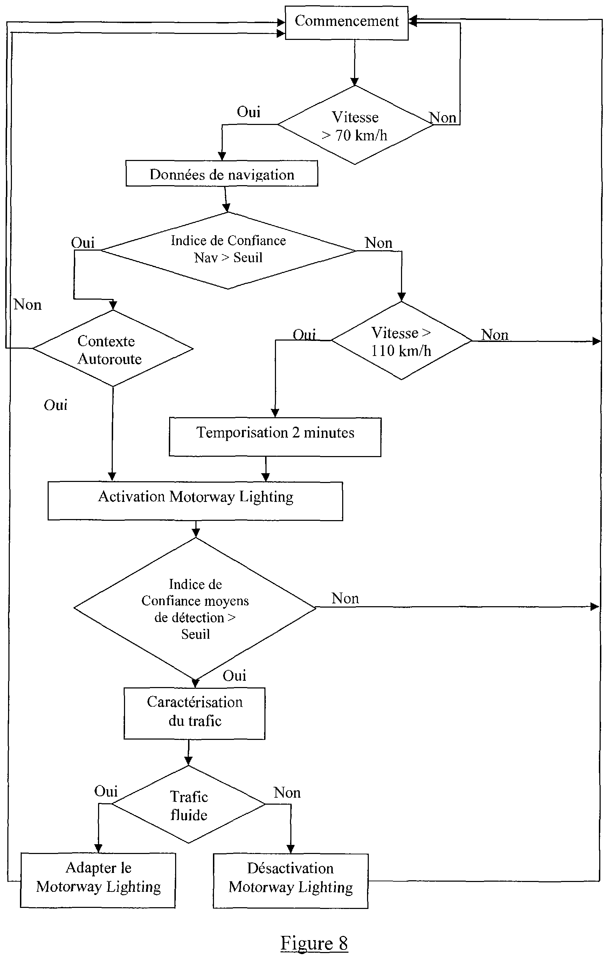

La figure 8 représente un autre exemple de réalisation plus global avec une suite d'étapes de commande d'un faisceau du type Motorway Lighting.

Le processus illustré est engagé par une détection de vitesse du véhicule et un test de dépassement d'un seuil de vitesse (70 Km/h dans l'exemple de la figure 8). Si le seuil est franchi, les moyens de traitement exploitent les données de navigation à condition que leur indice de confiance soit supérieur à un seuil prédéfini. Dans l'affirmative et si les données de navigation rapportent un contexte routier de type autoroute, la commande de faisceau utilise cette indication comme information de commande et active la fonction d'éclairage Motorway Lighting. Dans la négative, le processus recommence.

Une alternative à cette commande est produite sur la base d'une détection de vitesse du véhicule 1 supérieure à un seuil prédéfini (110 Km/h dans l'exemple de la figure 8), pendant une durée prédéterminée (la temporisation est de deux minutes dans l'exemple de la figure 8).

En mode Motorway Lighting activé, on détecte des objets cibles 7, on détermine leur position et vitesse relativement au véhicule 1 équipé et on détermine un indice de confiance en deçà duquel les données de détection ne sont pas exploitées en vue de la commande de faisceau. Si l'indice de confiance est satisfaisant, le trafic est analysé en particulier pour déterminer sa fluidité. Un trafic qui n'est pas fluide constitue une information de commande du faisceau révélant une situation de bouchon ou de ralentissement et la fonction Motorway Lighting est désactivée de sorte à ne pas éblouir les véhicules suivis 2a, 2b, 2c.

Si le trafic est fluide, le faisceau est adapté en fonction de la distance séparant le véhicule 1 équipé des véhicules suivis 2a, 2b, 2c et des véhicules croisés 3a, 3b en tenant compte d'éventuelles autres informations de commande telles la nature de la séparation entre les voies. Par exemple, si la distance aux autres véhicules est inférieure à un seuil prédéterminé (qui peut différer suivant que le véhicule est suivi ou croisé), le faisceau Motorway Lighting est désactivé. Suivant d'autres possibilités, la configuration géométrique de la lumière projetée est modifiée notamment pour que la longueur du faisceau soit fonction des détections de distance aux autres véhicules.

L'invention peut être mise en oeuvre pour tout type de véhicules et peut commander plusieurs faisceaux simultanément.

## Revendications

1. Procédé de commande d'un dispositif d'éclairage d'un véhicule (1), le procédé commandant un faisceau d'éclairage routier dudit véhicule comportant les étapes suivantes :

- obtenir des données de navigation aptes à caractériser le contexte routier du véhicule (1), détection d'objets cibles (7) en avant du véhicule (1) en utilisant des moyens de détection embarqués dans le véhicule (1),
- détermination d'une valeur de distance relative entre le véhicule (1) et les objets cibles (7),
- caractérisation de la nature des objets cibles (7),
- détermination de l'état du trafic sur la voie du véhicule
- commande dudit dispositif d'éclairage en combinant des données de navigation, la nature des objets cibles (7), les valeurs de distance relative et l'état du trafic sur la voie du véhicule,

**caractérisé en ce que** :

- l'étape de caractérisation de la nature des objets cibles (7) comprend l'identification de véhicules suivis (2a, 2b, 2c),
- la commande dudit dispositif d'éclairage du véhicule exploite une information de commande fonction de la distance relative du véhicule (1) et des véhicules suivis (2a, 2b, 2c)

et **en ce que** on effectue les étapes suivantes :

- détermination d'une valeur de vitesse relative entre le véhicule (1) et chaque véhicule suivi (2a, 2b, 2c),
- calcul d'une valeur moyenne de vitesse relative pour l'ensemble des véhicules suivis (2a, 2b, 2c),
- caractérisation du niveau de fluidité du trafic en fonction de la valeur moyenne de vitesse et de données de navigation caractérisant le type de route, et dans lequel la commande dudit dispositif d'éclairage du véhicule exploite une information de commande fonction du niveau de fluidité du trafic.

2. Procédé selon la revendication 1 dans lequel les moyens de détection utilisés incluent au moins un capteur du type radar ou lidar ou caméra.

3. Procédé selon l'une des revendications précédentes dans lequel l'étape de détection d'objets cibles (7) comprend :

- la mesure de valeurs de position et de vitesse relatives entre le véhicule (1) et des obstacles (6) situés à l'avant du véhicule (1),
- la construction d'objets cibles (7) par groupage d'obstacles (6) présentant des valeurs de position et de vitesse relatives homogènes.

4. Procédé selon l'une quelconque des revendications précédentes comportant, en vue de l'étape de détection d'objets cibles (7), la définition, au moyen des données de navigation, d'une zone d'intérêt (8) dans laquelle est opérée la détection.

**5.** Procédé selon la revendication 3 ou la revendication 4, dans lequel l'étape de détection comprend :

- l'obtention de données de navigation définissant des objets cibles potentiels,
- la confrontation des définitions d'objets cibles potentiels et des objets cibles (7) détectés.

**6.** Procédé selon la revendication précédente dans lequel les objets cibles potentiels comprennent une séparation centrale (4) de la route d'un type prédéterminé.

**7.** Procédé selon la revendication précédente dans lequel l'étape de commande de l'organe du véhicule exploite :

- une première information de commande si le type de séparation centrale (4) correspond à un objet cible détecté,
- une deuxième information de commande si le type de séparation centrale (4) ne correspond à aucun objet cible détecté.

**8.** Procédé selon l'une des revendications précédentes dans lequel l'étape de caractérisation de la nature des objets cibles (7) comprend l'identification de véhicules croisés (3).

**9.** Procédé selon la revendication précédente dans lequel la commande de l'organe du véhicule exploite une information de commande fonction de la distance relative du véhicule (1) et des véhicules croisés (3).

**10.** Procédé selon l'une des revendications précédentes dans lequel on effectue la commande de l'organe du véhicule en écartant les données de navigation et/ou les données détection si leur indice de fiabilité est inférieur à un seuil prédéfini.

**11.** Système de commande d'au moins un dispositif d'éclairage d'un véhicule, comportant un dispositif embarqué de navigation, des moyens de détection d'objets cibles (7) en avant du véhicule (1) et des moyens de traitement adaptés à mettre en oeuvre le procédé selon l'une des revendications précédentes.

**Patentansprüche**

**1.** Verfahren zur Steuerung einer Beleuchtungsvorrichtung eines Fahrzeugs (1), wobei das Verfahren einen Straßenbeleuchtungsstrahl des Fahrzeugs steuert, umfassend die folgenden Schritte:

- Erhalten von Navigationsdaten, die geeignet sind, den Straßenzusammenhang des Fahrzeugs (1) zu charakterisieren,
Erkennen von Zielobjekten (7) vor dem Fahrzeug (1) mithilfe von Erkennungsmitteln an Bord des Fahrzeugs (1),
Ermitteln eines Werts eines relativen Abstands zwischen dem Fahrzeug (1) und den Zielobjekten (7),
- Charakterisieren der Art der Zielobjekte (7),
- Ermitteln der Verkehrslage auf der Spur des Fahrzeugs
- Steuern der Beleuchtungsvorrichtung durch Kombinieren der Navigationsdaten, der Art der Zielobjekte (7), der Werte eines relativen Abstands und der Verkehrslage auf der Spur des Fahrzeugs,

**dadurch gekennzeichnet, dass**

- der Schritt des Charakterisierens der Art der Zielobjekte (7) das Identifizieren von Fahrzeugen, denen gefolgt wird (2a, 2b, 2c), umfasst,
- das Steuern der Beleuchtungsvorrichtung des Fahrzeugs eine Steuerungsinformation nutzt, die von dem relativen Abstand des Fahrzeugs (1) und der Fahrzeuge, denen gefolgt wird (2a, 2b, 2c), abhängig ist

und dadurch, dass die folgenden Schritte ausgeführt werden:

- Ermitteln eines Werts einer relativen Geschwindigkeit zwischen dem Fahrzeug (1) und jedem Fahrzeug, dem gefolgt wird (2a, 2b, 2c),
- Berechnen eines Mittelwerts einer relativen Geschwindigkeit für die Gesamtheit der Fahrzeuge, denen gefolgt wird (2a, 2b, 2c),
- Charakterisieren des Flüssigkeitsniveaus des Verkehrs in Abhängigkeit von dem Geschwindigkeitsmittelwert und Navigationsdaten, die den Straßentyp charakterisieren, und wobei das Steuern der Beleuchtungsvorrichtung des Fahrzeugs eine Steuerungsinformation nutzt, die von dem Flüssigkeitsniveau des Verkehrs abhängig ist.

**2.** Verfahren nach Anspruch 1, wobei die Erkennungsmittel mindestens einen Sensor des Typs Radar oder Lidar oder Kamera enthalten.

**3.** Verfahren nach einem der vorhergehenden Ansprüche, wobei der Schritt des Erkennens von Zielobjekten (7) Folgendes umfasst:

- das Messen von relativen Positions- und Geschwindigkeitswerten zwischen dem Fahrzeug (1) und Hindernissen (6), die sich vor dem Fahrzeug (1) befinden,
- das Konstruieren von Zielobjekten (7) durch Gruppierung von Hindernissen (6), die homogene relative Positions- und Geschwindigkeitswerte aufweisen.

**4.** Verfahren nach einem der vorhergehenden Ansprüche, umfassend, im Hinblick auf den Schritt des Erkennens von Zielobjekten (7), das Definieren, mittels der Navigationsdaten, eines Interessensgebiets (8), in dem das Erkennen durchgeführt wird.

**5.** Verfahren nach Anspruch 3 oder 4, wobei der Schritt des Erkennens Folgendes umfasst:

- das Erhalten von Navigationsdaten, die potentielle Zielobjekte definieren,
- das Gegenüberstellen der Definitionen potentieller Zielobjekte und der erkannten Zielobjekte (7).

**6.** Verfahren nach dem vorhergehenden Anspruch, wobei die potentiellen Zielobjekte eine mittlere Teilung (4) der Straße eines vorbestimmten Typs umfassen.

**7.** Verfahren nach dem vorhergehenden Anspruch, wobei der Schritt des Steuerns des Fahrzeugteils Folgendes nutzt:

- eine erste Steuerungsinformation, wenn der Typ der zentralen Teilung (4) einem erkannten Zielobjekt entspricht,
- eine zweite Steuerungsinformation, wenn der Typ der mittleren Teilung (4) keinem erkannten Zielobjekt entspricht.

**8.** Verfahren nach einem der vorhergehenden Ansprüche, wobei der Schritt des Charakterisierens der Art der Zielobjekte (7) das Identifizieren von entgegenkommenden Fahrzeugen (3) umfasst.

**9.** Verfahren nach dem vorhergehenden Anspruch, wobei das Steuern des Fahrzeugteils eine Steuerungsinformation nutzt, die von dem relativen Abstand des Fahrzeugs (1) und der entgegenkommenden Fahrzeuge (3) abhängig ist.

**10.** Verfahren nach einem der vorhergehenden Ansprüche, wobei das Steuern des Fahrzeugteils durchgeführt wird, wobei die Navigationsdaten und/oder die Erkennungsdaten verworfen werden, wenn ihr Zuverlässigkeitsindex niedriger als eine vorbestimmte Schwelle ist.

**11.** System zur Steuerung mindestens einer Beleuchtungsvorrichtung eines Fahrzeugs, umfassend eine bordeigene Navigationsvorrichtung, Mittel zur Erkennung von Zielobjekten (7) vor dem Fahrzeug (1) und Verarbeitungsmittel, die geeignet sind, das Verfahren nach einem der vorhergehenden Ansprüche umzusetzen.

## Claims

**1.** Method for controlling a lighting device of a vehicle (1), the method controlling a road lighting beam of said vehicle comprising the following steps:

- obtaining navigation data suitable for characterizing the road context of the vehicle (1), detecting target objects (7) in front of the vehicle (1) by using detection means onboard the vehicle (1),
- determining a value of the relative distance between the vehicle (1) and the target objects (7),
- characterizing the nature of the target objects (7),
- determining the state of the traffic on the lane used by the vehicle
- controlling said lighting device by combining navigation data, the nature of the target objects (7), the relative distance values and the state of the traffic on the lane used by the vehicle, **characterized in that**
- the step for characterizing the nature of the target objects (7) comprises the identification of vehicles being followed (2a, 2b, 2c),
- the control of said lighting device of the vehicle exploits a control information item that is a function of the relative distance of the vehicle (1) and of the vehicles being followed (2a, 2b, 2c)

and **in that** the following steps are performed:

- determining a relative speed value between the vehicle (1) and each vehicle being followed (2a, 2b, 2c),
- computing an average relative speed value for all the vehicles being followed (2a, 2b, 2c),
- characterizing the level of fluidity of the traffic according to the average value of speed and navigation data characterizing the road type, and in which the control of said lighting device of the vehicle exploits a control information item that is a function of the level of fluidity of the traffic.

**2.** Method according to Claim 1 in which the detection means used include at least one sensor of the radar or lidar or camera type.

**3.** Method according to one of the preceding claims, in which the step for detecting target objects (7) comprises:

- measuring relative position and speed values between the vehicle (1) and obstacles (6) situated in front of the vehicle (1),
- constructing target objects (7) by grouping obstacles (6) exhibiting uniform relative position and speed values.

4. Method according to any one of the preceding claims, comprising, for the purpose of the step for detecting target objects (7), the definition, by means of the navigation data, of a zone of interest (8) in which the detection is made.

5. Method according to Claim 3 or claim 4, in which the detection step comprises:

- obtaining navigation data defining potential target objects,
- comparing the definitions of potential target objects and of the target objects detected (7).

6. Method according to the preceding claim, in which the potential target objects include a central divider (4) of the road of a predetermined type.

7. Method according to the preceding claim, in which the step for controlling the member of the vehicle exploits:

- a first control information item if the type of central divider (4) corresponds to a detected target object,
- a second control information item if the type of central divider (4) does not correspond to any detected target object.

8. Method according to one of the preceding claims, in which the step for characterizing the nature of the target objects (7) comprises the identification of vehicles passed (3).

9. Method according to the preceding claim, in which the control of the member of the vehicle exploits a control information item that is a function of the relative distance of the vehicle (1) and of the vehicles passed (3).

10. Method according to one of the preceding claims, in which the member of the vehicle is controlled by discarding the navigation data and/or the detection data if their reliability index is below a predefined threshold.

11. System for controlling at least one lighting device of a vehicle, comprising an onboard navigation device, means for detecting target objects (7) in front of the vehicle (1) and processing means suitable for implementing the method according to one of the preceding claims.

Figure 1

Figure 2

Figure 3

Figure 4

Figure 5

Données de navigation ⟶ Définition Zone de détection

Capture de données de détection

Définition d'objets cibles

Données de navigation ⟶ Caractérisation d'objets cibles
Position - Vitesse

Données de navigation ⟶ Adaptation du faisceau

Figure 6

Bouchon

Ralentissement        Trafic fluide

-v        0        v

Figure 7

Figure 8

Figure 9

Figure 10

**Figure 11**

Noeud
Point de forme
Zone de démarrage et d'arrêt
Forêt
Pont ou Tunnel
Horizon électronique

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20020080618 A1